# FASCICULE DE BREVET EUROPEEN

(11) **EP 1 680 754 B1**
(45) Date de publication et mention de la délivrance du brevet: **27.08.2008**
(21) Numéro de dépôt: 04805383.9
(22) Date de dépôt: 04.11.2004
(51) Int. Cl.: G06F 17/30

(54) **PROCEDE ET SYSTEME DE DIFFUSION DE DOCUMENTS VERS DES TERMINAUX DISPOSANT DE CAPACITES D'AFFICHAGE LIMITEES, TELS QUE DES TERMINAUX MOBILES**
VERFAHREN UND SYSTEM ZUM ABLIEFERN VON DOKUMENTEN AN ENDGERÄTEN MIT BEGRENZTEN ANZEIGEFÄHIGKEITEN WIE ZUM BEISPIEL MOBILENDGERÄTE
METHOD AND SYSTEM FOR DELIVERING DOCUMENTS TO TERMINALS WITH LIMITED DISPLAY CAPABILITIES, SUCH AS MOBILE TERMINALS

(30) Priorité: 05.11.2003 FR 0313014
(43) Date de publication de la demande: 19.07.2006
(73) Titulaire: Royer, Thierry, 78590 Noisy le Roi (FR); Devos, Marc, 78590 Noisy le Roi (FR)
(72) Inventeur: ROYER, Thierry, 78590 Noisy le Roi (FR)
(74) Mandataire: Pichat, Thierry
(86) Numéro de dépôt international: PCT/FR2004/002832
(87) Numéro de publication internationale: WO 2005/045699

(56) Documents cités:
- EP-A- 1 052 598
- US-A1- 2002 120 653
- US-B1- 6 611 358
- DEVICE INDEPENDENCE WORKING GROUP: "Device Independence Principles" W3C, [Online] 1 septembre 2003 (2003-09-01), XP002285699 Extrait de l'Internet: URL:http://www.w3.org/TR/di-princ/> [extrait le 2004-06-23]

## Description

La présente invention concerne la diffusion de documents à des terminaux disposant de capacités limitées, notamment en terme d'affichage et de mémoire.

Elle s'applique notamment, mais non exclusivement à la téléphonie mobile et plus particulièrement à la visualisation sur un terminal mobile de documents transmis par l'intermédiaire d'un réseau de transmission de données tel que le réseau Internet, ces documents étant diffusés par des sites Web ou transmis en pièces jointes dans des messages électroniques.

Avec l'apparition de systèmes de téléphonie mobile de nouvelle génération tels que GPRS (General Packet Radio Service), i-Mode^{™} et UMTS (Universal Mobile Télécommunications System), les opérateurs de télécommunication et les éditeurs de contenu proposent de nombreux services accessibles à des terminaux mobiles adaptés, par exemple compatibles avec les protocoles WAP (Wireless Application Protocol) et i-mode. Parmi ces services, on trouve notamment des services de diffusion d'informations tels que des sites ou des portails Web et des services de messagerie électronique. Les terminaux peuvent ensuite récupérer les contenus des documents en appliquant les spécifications techniques de passerelles WAP, notamment grâce au mode de transmission WTP-SAR (Wireless Transfer Protocol - Segmentation and Reassembly) qui segmente les contenus.

Toutefois, les documents, qu'ils soient accessibles sur le réseau Internet ou transmis en pièce jointe d'un message électronique, peuvent présenter de nombreux formats différents. On peut citer des documents HTML (HyperText Markup Language), des documents issus de logiciels de traitement de texte tels que Microsoft Word^{™} ou Adobe Acrobate^{™}, des documents issus de logiciels de présentation tels que Microsoft Powerpoint^{™}, des feuilles de calcul produites par un issues logiciel tableur tel que Microsoft Excel^{™}, des images pouvant présenter de nombreux formats différents de type vectoriels ou matriciels tels que GIF (Graphies Interchange Format), JPEG (Joint Photographic Experts Group), BMP (BitMaP file format), WBMP (Wireless application protocol BitMaP), PNG (Portable Network Graphics), TIFF (Tag Image File Format), ainsi que leurs nombreux dérivés. Pour pouvoir visualiser des documents de chacun de ces formats, il faut disposer d'un logiciel adapté permettant de les visualiser.

Or, du fait de leurs faibles dimensions, les terminaux mobiles présentent une capacité de mémoire très limitée. Il est donc impossible d'installer en mémoire tous les logiciels permettant de visualiser, même les formats de document les plus courants. En outre, les dimensions de l'écran d'affichage d'un terminal mobile sont très réduites, en comparaison avec l'écran d'affichage d'un ordinateur de bureau.
Pour ces raisons, le contenu de ces documents ne peut en général pas être affiché à l'écran du terminal et l'utilisateur ne peut les consulter que s'il dispose d'un ordinateur de bureau ou portable.

Certains formats comme le format HTML qui est le plus couramment utilisé pour diffuser des documents par Internet, ont toutefois été adaptés à la téléphonie mobile. On peut citer à ce sujet le format cHTML (compact HTML) conçu pour les systèmes i-Mode et le format WML (Wireless Markup Language) conçu pour le protocole WAP. Cette solution présente l'inconvénient de ne donner accès qu'aux formats de documents adaptés à la téléphonie mobile.

Par ailleurs, il existe à l'heure actuelle un très grand nombre de modèles différents de terminal mobile présentant des dimensions d'écran d'affichage et des capacités de mémoire très variées. Lorsqu'il s'agit d'afficher un document, il faut en outre considérer les capacités de défilement vertical et/ou horizontal de l'affichage (scrolling) du terminal qui peuvent également varier d'un modèle à l'autre.

Le brevet US 6 611 358 décrit un système de conversion de documents adapté à l'affichage de documents sur un téléphone mobile, et prenant en compte les capacités d'affichage de ce dernier. Toutefois, ce brevet ne prévoit pas d'afficher sur un terminal mobile n'importe quel type de document et notamment des fichiers contenant du texte. Il ne prévoit pas non plus d'ajuster la résolution d'une image affichée sur un terminal en fonction du contenu de l'image et des capacités d'affichage du terminal, afin de faciliter la lecture du document par l'utilisateur.

La présente invention a pour but de supprimer ces inconvénients. Cet objectif est atteint par la prévision d'un procédé d'adaptation d'un document pour le rendre visualisable sur un terminal présentant des capacités d'affichage limitées selon la revendication 1.

Selon l'invention, ce procédé comprend des étapes consistant à analyser la page de document devant être affichée par le terminal pour en déterminer des caractéristiques, l'image résultant de la conversion présentant une résolution choisie en fonction des caractéristiques du document, de manière à ce que le contenu de la page de document soit lisible à l'écran du terminal.

Selon un mode de réalisation préféré de l'invention, la détermination des capacités de traitement et d'affichage du terminal comporte une étape de détermination d'un axe d'affichage correspondant à un axe d'une plus grande dimension d'image susceptible d'être affichée par le terminal, l'analyse de la page de document à afficher comportant une étape de détermination d'un sens de lecture de la page de document, la conversion de la page de document étant suivie d'une étape d'adaptation de l'image résultant de la conversion consistant faire coïncider le sens de lecture de la page de document à l'axe d'affichage du terminal.

Selon un mode de réalisation préféré de l'invention, ce procédé comprend en outre une étape d'extraction de l'image résultant de la conversion d'une bande dont les dimensions correspondent à des dimensions maximum d'une image susceptible d'être affichée par le terminal, et dont l'orientation dans l'image correspond à l'axe de lecture de la page de document, la bande d'image étant transmise au terminal.

Selon un mode de réalisation préféré de l'invention, la résolution de l'image générée par la conversion d'une page de document est déterminée en fonction de tailles de caractères alphanumériques présents dans la page de document et en fonction des dimensions de la page.

Selon un mode de réalisation préféré de l'invention, ce procédé comprend une phase préalable de sélection d'une partie de page de document à afficher à l'écran du terminal comprenant des étapes consistant à convertir la page de document en une image réduite présentant un format compatible avec les capacités de traitement et d'affichage d'un terminal, et à une résolution choisie de manière à ce que la totalité de l'image puisse être affichée par le terminal, et transmettre de l'image réduite de la page au terminal, l'utilisateur du terminal ayant alors la possibilité de sélectionner une zone de l'image affichée, la zone sélectionnée de la page de document étant ensuite convertie à une résolution choisie en fonction des caractéristiques de la page de document, de manière à ce que le contenu de la page de document soit lisible à l'écran du terminal.

Avantageusement, si la page de document est une image représentant du texte, l'analyse de la page de document comprend des étapes de reconnaissance de caractères alphanumériques présents dans la page de document et de détermination d'une taille majoritaire des caractères alphanumériques reconnus, la résolution de l'image générée par la conversion d'une page de document étant déterminée à partir de la taille majoritaire obtenue.

Selon un mode de réalisation préféré de l'invention, l'analyse de la page de document consiste à séparer des images et des textes contenus dans la page, la conversion de la page de document consistant à générer à partir des textes des images dans un format adapté, et à convertir le format des images pour qu'elles soient visualisables sur le terminal.

L'invention concerne également un système d'adaptation d'un document pour le rendre visualisable sur un terminal présentant des capacités d'affichage limitées selon la revendication 8.

Selon l'invention, le module d'adaptation comprend en outre des moyens pour analyser la page de document devant être affichée par le terminal, afin d'en déterminer des caractéristiques, l'image résultant de la conversion présentant une résolution choisie en fonction des caractéristiques du document, de manière à ce que le contenu de la page de document soit lisible à l'écran d'affichage du terminal.

Selon un mode de réalisation préféré de l'invention, les moyens de détermination des capacités de traitement et d'affichage du terminal comprennent des moyens pour déterminer un axe d'affichage correspondant à un axe d'une plus grande dimension d'image susceptible d'être affichée par le terminal, les moyens d'analyse de la page de document à afficher comportant des moyens de détermination d'un sens de lecture de la page de document, le module d'adaptation comprenant des moyens pour adapter l'image résultant de la conversion en faisant coïncider le sens de lecture de la page de document à l'axe d'affichage du terminal.

Selon un mode de réalisation préféré de l'invention, le module d'adaptation comprend en outre de moyens pour découper l'image résultant de la conversion en bandes dont les dimensions correspondent à des dimensions maximum d'une image susceptible d'être affichée par le terminal, et dont l'orientation dans l'image correspond à l'axe de lecture de la page de document, et des moyens pour transmettre successivement vers le terminal les bandes d'image de l'image de la page de document.

Avantageusement, le module d'adaptation est intégré dans un serveur Web diffusant des documents vers des terminaux mobiles.

Alternativement, le module d'adaptation est intégré dans une passerelle assurant l'interconnexion entre un réseau de téléphonie mobile auquel les terminaux sont susceptibles d'être connectés, et un réseau de transmission de données donnant accès à des documents susceptibles d'être visualisés par les terminaux.

Alternativement, le module d'adaptation est intégré dans un serveur spécialisé connecté à un réseau de transmission de données donnant accès à des documents susceptibles d'être visualisés par les terminaux, les terminaux étant des terminaux mobiles susceptibles de se connecter à un réseau de téléphonie mobile interconnecté avec le réseau de transmission de données.

Un mode de réalisation préféré de l'invention sera décrit ci-après, à titre d'exemple non limitatif, avec référence aux dessins annexés dans lesquels :
La figure 1 représente un système de diffusion de documents dans un réseau mobile selon l'invention ;
La figure 2 représente schématiquement un module d'adaptation selon l'invention ;
La figure 3 illustre sous la forme d'un organigramme une procédure de délivrance d'un document.

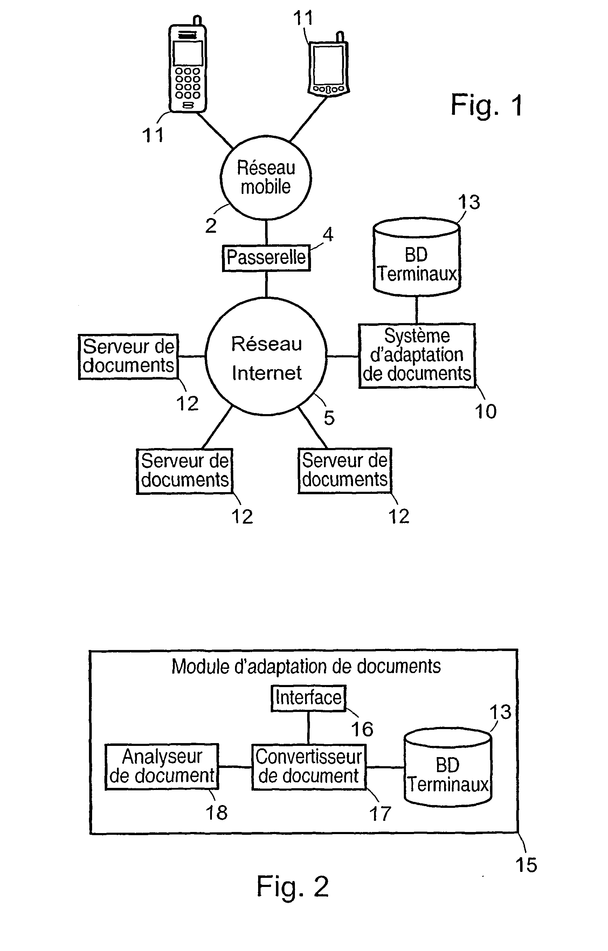

Le système représenté sur la figure 1 comprend un réseau mobile 2 auquel des terminaux d'utilisateurs 11, 12 peuvent se connecter, et au moins une passerelle 4 reliant le réseau mobile à un réseau de transmission de données 5 tel que le réseau Internet. Le réseau 5 donne accès à des serveurs 12 de diffusion des documents tels que des sites Web, adaptés à la diffusion dans le réseau Internet de documents au format HTML ou ses dérivés comme cHTML, xHTML, ou encore WML.

Les terminaux mobiles 11 peuvent être de type téléphone mobile ou assistant électronique personnel (PDA) équipé d'une interface de télécommunication mobile.

Les serveurs de documents peuvent être des sites d'information, des sites de commerce électronique présentant par exemple des fiches techniques de produits, ou encore des sites de services, comme par exemple, des moteurs de recherche ou des sites de messagerie offrant à partir d'une interface Web la possibilité d'émettre et de recevoir des messages électroniques pouvant être associés à des pièces jointes.

Si les terminaux mobiles conçus pour accéder au réseau Internet, peuvent afficher des documents au format HTML ou l'un de ses dérivés, ils ne peuvent en général pas afficher des documents dans d'autres formats qui sont pourtant accessibles dans le réseau Internet, par exemple sous la forme d'une pièce jointe d'un message électronique ou diffusé sur un site d'information.

Pour pouvoir visualiser n'importe quel type de document sur un terminal mobile, au moins une partie des serveurs 12 sont équipés d'un module d'adaptation de documents selon l'invention permettant d'adapter un document pour qu'il soit visualisable sur un terminal mobile 11. Ce module peut alternativement être intégré dans la passerelle 4.

Dans une autre variante de l'invention, ce module est intégré dans un serveur 10 spécialisé qui reçoit des documents à adapter et transmet en retour tout ou partie de chaque document reçu, sous une forme adaptée respectivement aux caractéristiques d'un terminal mobile dont le type a été spécifié en association avec le document à adapter. Les documents à adapter peuvent être transmis par la passerelle 4 ou par les serveurs 12 sur requête des utilisateurs des terminaux mobiles.

L'adaptation de documents réalisée par le module d'adaptation selon l'invention consiste à convertir le document en une ou plusieurs images d'un format adapté au terminal, puis si la taille de l'image est trop importante pour les capacités du terminal, à découper l'image en morceaux et à transmettre ces morceaux d'image l'un à la suite de l'autre, sur commande de l'utilisateur. Plus précisément, le module d'adaptation est conçu pour identifier le terminal et en déterminer les caractéristiques, transformer un document ou faire appel à un tel service de transformation, pour le convertir de son format original en un format graphique ou semi-graphique supporté par le terminal, et gérer un dialogue avec le terminal dans lequel il transfère à la demande du terminal et selon les possibilités de ce dernier, les pages ou parties de pages du document en format graphique ou semi-graphique. Si le terminal ne peut pas exécuter un logiciel applicatif local, le module d'adaptation inclut la page ou la partie de page en format graphique ou semi-graphique dans un document lisible par le terminal dans lequel sont également insérées des commandes permettant à l'utilisateur de demander la partie suivante ou précédente du document en format graphique ou semi-graphique.

Comme cela est représenté sur la figure 2, le module d'adaptation 15 selon l'invention comprend une interface 16 par laquelle sont reçues toutes les requêtes de conversion de documents et de transmission de parties de documents converties, un convertisseur 17 de document conçu pour convertir n'importe quel type de document en une image dont le format est préalablement spécifié, et un analyseur 18 de document conçu pour analyser le contenu du document à convertir en vue notamment de déterminer la résolution à employer pour la conversion du document, afin que ce dernier soit lisible ou compréhensible sur le terminal.

En outre, le module d'adaptation 15 comprend ou dispose d'un accès à au moins une base de données 13 rassemblant les caractéristiques de tous les terminaux mobiles commercialisés, susceptibles d'accéder à des documents diffusés par l'intermédiaire du réseau Internet.

La base de données 13 rassemble pour chaque type terminal notamment certaines des informations suivantes :
- un identifiant du modèle de terminal,
- les dimensions (largeur, hauteur) en nombre de pixels de l'écran du terminal,
- les dimensions (largeur, hauteur) maximales en nombre de pixels d'une image susceptible d'être affichée par le terminal avec défilement vertical et/ou horizontal,
- la taille maximum d'une image susceptible d'être affichée par le terminal,
- le mode d'affichage du terminal, en couleurs / niveaux de gris,
- le nombre de couleurs ou de niveaux de gris,
- les formats de codage d'image supportés par le terminal (GIF, JPEG, BMP, WBMP, PNG, TIFF,...),
- le protocole d'affichage du terminal (cHTML, WML, ...)
- la possibilité d'exécuter des petits programmes de type applet, les langages de programmation supportés par le terminal,
- la mémoire disponible pour charger et exécuter de tels programmes, pour charger et afficher des images, et pour les ressources du terminal,
- les touches de fonction du terminal susceptibles d'être utilisées pour spécifier une partie d'image à afficher,

Pour effectuer une telle analyse, l'analyseur 18 de document comprend un ensemble applicatifs conçus pour lire des documents électroniques de différents formats prédéfinis. L'analyse d'un document consiste à déterminer le nombre de pages du document, les dimensions de chacune des pages. Dans le cas de documents contenant du texte ou plus généralement des caractères alphanumériques, elle consiste également à déterminer la taille des caractères alphanumériques employés. Les dimensions d'une page de document et la taille des caractères employés dans la page servent ensuite à déterminer la résolution à appliquer lors de la conversion de la page en image.

Dans une réalisation avantageuse de l'invention, l'analyse d'un document consiste également à déterminer le sens de lecture de chaque page en fonction de la langue. Ainsi, pour les langues occidentales, le sens de lecture est de gauche à droite, puis du haut vers le bas.

Le convertisseur 17 est en particulier conçu pour déterminer une opération de conversion en fonction du format du document à convertir, du format vers lequel convertir le document, sélectionné en fonction du terminal et éventuellement du type de document, ainsi que de la résolution à respecter lors de la conversion du document. A cet effet, le convertisseur 17 fait appel à un ensemble d'applicatifs adaptés respectivement aux différentes conversions susceptibles d'être effectuées.

L'analyseur 18 et le convertisseur 17 sont avantageusement conçus pour intégrer facilement des applicatifs supplémentaires pour pouvoir traiter des formats de documents supplémentaires.

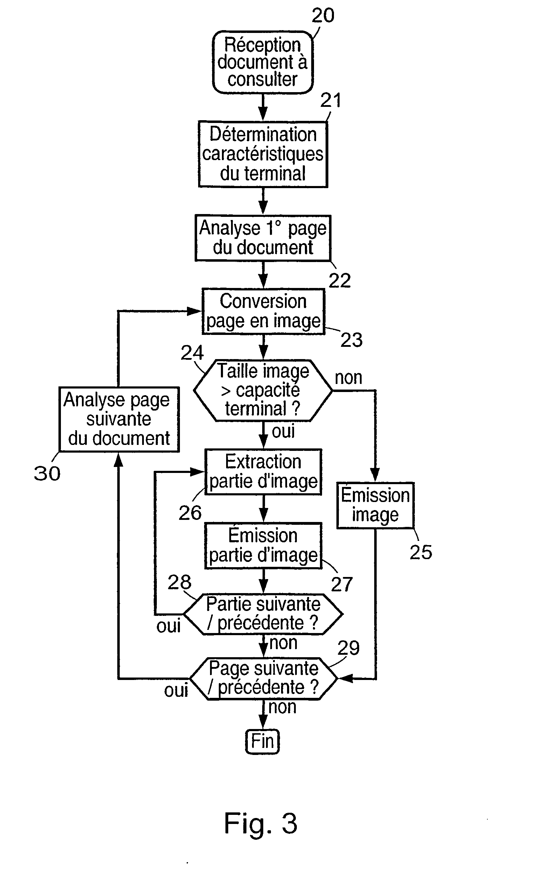

La figure 3 illustre plus en détail un exemple de procédure 20 exécutée par le module d'adaptation 15 pour traiter un document reçu en un format quelconque et le transmettre vers un terminal mobile dans un format qui peut être affiché par ce dernier.
La procédure 20 comprend tout d'abord une étape de détermination des caractéristiques du terminal 11. Cette étape consiste notamment à récupérer un identifiant du modèle de terminal, par exemple grâce au paramètre "user-agent" prévu dans le protocole HTTP. Cet identifiant permet de retrouver dans la base de données 13 les caractéristiques du terminal.

A l'étape suivante 22, le module d'adaptation 15 analyse le document à transmettre au terminal pour en déterminer le format, le nombre de pages qu'il contient, etc, et s'il s'agit d'un document contenant du texte, les dimensions de la première page de document et la taille de caractères alphanumériques majoritairement employée dans cette page ou la plus petite taille de caractères significativement employée.

Si le document ne contient pas de texte, on peut choisir une résolution adaptée à des pages de document de dimension A4 et une taille de caractères alphanumériques choisie par défaut, par exemple 10.

Dans une variante de l'invention, dans le cas d'un document contenant une image matricielle représentant du texte, l'analyse du document par le module d'adaptation 15 fait appel à un outil de reconnaissance de caractères (OCR) pour convertir en texte les parties de l'image représentant du texte, de manière à pouvoir déterminer la taille du texte et ainsi la résolution à employer lors de la conversion du document en une image affichable par le terminal, pour que le texte du document affiché à l'écran du terminal soit lisible par l'utilisateur.

A l'étape 23 suivante, la première page du document est convertie en une image codée dans un format accepté par le terminal, en respectant la mise en page du document, la taille majoritaire de caractères alphanumériques, déterminée à l'étape précédente étant utilisée pour déterminer la résolution optimale de l'image ainsi générée, pour en permettre la lecture à l'écran du terminal, sans pour autant augmenter sa taille d'une manière excessive. Ainsi, une page de texte de taille A4/orientation portrait utilisant une police de caractères de 10 à 12 peut être convertie en une image 590 x 840 pixels.

Si le terminal supporte plusieurs formats de codage d'image, le format de l'image qui est générée peut en outre être choisi en fonction du type d'informations contenues dans la page. Ainsi, une page contenant du texte et des dessins est convertie de préférence en format GIF ou PNG, tandis qu'une page contenant des photos est plutôt convertie en JPEG.

A l'étape 24 suivante, le module d'adaptation compare l'image ainsi générée avec la taille maximale d'image admissible par le terminal. Si la taille de l'image est acceptable par le terminal, le module d'adaptation exécute l'étape 25 consistant à insérer l'image dans un fichier contenant des commandes conformes au protocole d'affichage du terminal (par exemple cHTML), et notamment une commande permettant à l'utilisateur d'obtenir la page suivante ou précédente du document, si le document comporte plusieurs pages. Le fichier ainsi généré est ensuite transmis vers le terminal.

A l'étape 29 suivante, si le document comporte plusieurs pages et que l'utilisateur a activé la commande de la page suivante, le module d'adaptation exécute l'étape 30 consistant à analyser la page suivante du document, puis reprend la séquence d'étapes décrites ci-avant, à l'étape 23 de conversion de la page analysée en image.

Si à l'étape 24, la taille de l'image générée est supérieure à la taille maximale d'image admissible par le terminal, cette image est découpée à l'étape 26 en plusieurs bandes dont la taille correspond à la taille maximale acceptable par le terminal. On peut prévoir un recouvrement éventuel de ces bandes pour faciliter la lecture du document, notamment pour intégrer les lignes ou les mots coupés lors du découpage de l'image en bandes.

A l'étape 27 suivante, le module d'adaptation insère la première bande d'image obtenue à l'étape précédente dans un fichier contenant des commandes conformes au protocole d'affichage du terminal (par exemple cHTML), et notamment des commandes permettant à l'utilisateur d'obtenir la bande suivante de l'image et la page suivante du document si le document comporte plusieurs pages. Le fichier ainsi généré est ensuite transmis vers le terminal.

Une fois que la bande d'image est transmise à l'étape 27, le module d'adaptation passe à l'étape 28, où il reçoit les commandes d'affichage de la bande précédente ou suivante de l'image générée, et revient à l'étape 26 si l'utilisateur a commandé une autre bande d'image, ou passe à l'étape 29 si l'utilisateur a émis une autre commande.

Aux étapes 25 et 27, l'orientation de la bande d'image extraite ou de l'image qui est insérée dans le fichier transmis au terminal est adaptée pour exploiter au maximum les capacités d'affichage du terminal et en particulier les capacités de défilement d'image à l'écran. Ainsi, si le terminal accepte des images plus hautes que la hauteur de l'écran d'affichage, en intégrant un défilement vertical, ou si le terminal dispose d'un écran plus haut que large sans capacité de défilement, il est avantageux de faire pivoter l'image à afficher de 90° dans le sens des aiguilles d'une montre (dans le cas de texte dans une langue occidentale), l'image ainsi basculée de 90° étant ensuite insérée dans le fichier qui est transmis au terminal.

Ainsi, par exemple si le terminal comporte un écran de 120 pixels en largeur et 130 pixels en hauteur, avec une capacité de défilement de 390 pixels en hauteur, l'image à transmettre est découpée en bandes d'au maximum 390 pixels de largeur et 120 pixels de hauteur. Chaque bande est ensuite basculée de 90° pour obtenir une bande de 120 pixels en largeur et 390 pixels en hauteur puis insérée dans un fichier qui est transmis au terminal. Lorsqu'un tel fichier est affiché à l'écran du terminal, l'utilisateur peut le visualiser correctement en faisant simplement basculer son terminal de 90° dans le sens inverse des aiguilles d'une montre, et en actionnant éventuellement la commande de défilement pour visualiser la partie droite de l'image transmise.

On définit ainsi lors de l'étape 22 d'analyse d'une page de document un axe de lecture (par exemple de gauche à droite pour une page en langue occidentale) et un axe d'affichage déterminé par la plus grande dimension en nombre de pixels de la taille maximale d'image admissible par le terminal (dans l'exemple précédent, du haut vers le bas). A l'étape 25, l'image qui est insérée dans le fichier transmis au terminal est éventuellement basculée pour que son axe de lecture coïncide avec l'axe d'affichage du terminal. De même, à l'étape 26, la bande d'image à extraire de l'image est déterminée de manière à ce que l'axe de sa plus grande dimension coïncide avec l'axe de lecture du document. Cette bande est ensuite insérée dans le fichier transmis de manière à ce que l'axe de sa plus grande dimension coïncide avec l'axe d'affichage du terminal.

Par ailleurs, certains terminaux sont capables d'exécuter des petits programmes de type applet. Dans ce cas, le module d'adaptation 15 exécute la procédure 20 en passant par l'étape 25 où l'image générée est transmise au terminal dans la limite de la capacité mémoire de celui-ci, en une seule fois ou par blocs dans un fichier contenant un programme de gestion du défilement de l'image dans le sens vertical et si nécessaire dans le sens horizontal. Bien entendu, dans le cas où le terminal intègre une telle gestion de défilement, il n'est pas nécessaire d'intégrer un tel programme de gestion de défilement.

L'axe d'affichage du terminal correspond alors à la plus grande dimension de l'écran d'affichage, et l'image peut être basculée comme précédemment pour faire coïncider cet axe d'affichage avec l'axe de lecture de la page.

En variante de l'étape 26, pour un terminal pouvant charger des applications embarquées, le module d'adaptation transmet avantageusement l'image de la page complète en un format réduit adapté à la taille maximale d'image susceptible d'être affichée par le terminal, et si cela est possible tout ou partie de l'image complète à la résolution de lisibilité choisie. L'utilisateur peut ensuite, en déplaçant un curseur représentant la zone de lecture à l'écran d'affichage du terminal (à la résolution de lisibilité), sélectionner la partie d'image qu'il veut afficher en vue de sa lecture. La validation de la position du curseur déclenche l'affichage de la bande d'image sélectionnée par le curseur. L'utilisateur peut ensuite faire défiler la zone de lecture dans l'image transmise de la page du document, par exemple en actionnant ensuite les touches de commande du terminal ayant servi au déplacement du curseur.

Dans une autre variante de l'invention, l'utilisateur a la possibilité d'adapter le niveau de grossissement de l'image, par exemple lorsque la page de document à afficher est une image ou contient des zones de texte en plus petits caractères qui ne sont pas lisibles à la résolution choisie par le module d'adaptation lors de la conversion de la page de document en image. Dans ce dernier cas, on peut prévoir d'afficher un curseur signalant à l'utilisateur qu'il peut obtenir la zone de texte marquée par le curseur avec une résolution adaptée à la lecture de cette zone de texte à l'écran de son terminal.

Dans une autre variante de l'invention, le module d'adaptation est conçu pour proposer à l'utilisateur de fournir au terminal des fichiers contenant des composants visuels de différents formats. Par exemple, si une page de document contient des images et du texte, le module d'adaptation peut isoler l'image et fournir plusieurs blocs de formats différents, à savoir par exemple GIF pour les parties de texte et JPEG pour les images.

Dans une autre variante de l'invention, le module d'adaptation extrait sur commande de l'utilisateur, les textes figurant à partir de la zone ou la page consultée du document, et les transmet vers le terminal afin qu'ils soient affichés en faisant appel aux capacités d'affichage de texte du terminal, sans bien sûr respecter la mise en page du document. On peut également prévoir d'extraire à partir de la zone ou la page consultée des informations annexes notamment sur la structure du document.

## Revendications

1. Procédé d'adaptation d'un document pour le rendre visualisable sur un terminal (11) présentant des capacités d'affichage limitées, le procédé comprenant des étapes consistant à :
- déterminer (21) des capacités de traitement et d'affichage d'un terminal,
- convertir (23) une page d'un document dans un format graphique ou semi-graphique choisi en fonction des capacités de traitement et d'affichage du terminal, et
- transmettre (25, 27) au moins en partie l'image de la page de document convertie vers le terminal,
**caractérisé en ce qu'**il comprend des étapes consistant à analyser (22, 30) la page de document devant être affichée par le terminal (11) pour en déterminer des caractéristiques comprenant la taille de caractères employée dans la page, l'image résultant de la conversion présentant une résolution choisie en fonction des caractéristiques du document, de manière à ce que le contenu de la page de document soit lisible à l'écran du terminal.

2. Procédé selon la revendication 1,
**caractérisé en ce que** la détermination (21) des capacités de traitement et d'affichage du terminal comporte une étape de détermination d'un axe d'affichage correspondant à un axe d'une plus grande dimension d'image susceptible d'être affichée par le terminal (11), l'analyse de la page de document à afficher comportant une étape de détermination d'un sens de lecture de la page de document, la conversion de la page de document étant suivie d'une étape d'adaptation de l'image résultant de la conversion consistant faire coïncider le sens de lecture de la page de document à l'axe d'affichage du terminal.

3. Procédé selon la revendication 1 ou 2,
**caractérisé en ce qu'**il comprend en outre une étape (26) d'extraction de l'image résultant de la conversion d'une bande dont les dimensions correspondent à des dimensions maximum d'une image susceptible d'être affichée par le terminal, et dont l'orientation dans l'image correspond à l'axe de lecture de la page de document, la bande d'image étant transmise au terminal.

4. Procédé selon l'une des revendications 1 à 3,
**caractérisé en ce que** la résolution de l'image générée par la conversion d'une page de document est déterminée en fonction de tailles de caractères alphanumériques présents dans la page de document et en fonction des dimensions de la page.

5. Procédé selon l'une des revendications 1 à 4,
**caractérisé en ce qu'**il comprend une phase préalable de sélection d'une partie de page de document à afficher à l'écran du terminal (11) comprenant des étapes consistant à convertir la page de document en une image réduite présentant un format compatible avec les capacités de traitement et d'affichage d'un terminal, et à une résolution choisie de manière à ce que la totalité de l'image puisse être affichée par le terminal, et transmettre de l'image réduite de la page au terminal, l'utilisateur du terminal ayant alors la possibilité de sélectionner une zone de l'image affichée, la zone sélectionnée de la page de document étant ensuite convertie à une résolution choisie en fonction des caractéristiques de la page de document, de manière à ce que le contenu de la page de document soit lisible à l'écran du terminal.

6. Procédé selon l'une des revendications 1 à 5,
**caractérisé en ce que** si la page de document est une image représentant du texte, l'analyse de la page de document comprend des étapes de reconnaissance de caractères alphanumériques présents dans la page de document et de détermination d'une taille majoritaire des caractères alphanumériques reconnus, la résolution de l'image générée par la conversion d'une page de document étant déterminée à partir de la taille majoritaire obtenue.

7. Procédé selon l'une des revendications 1 à 6,
**caractérisé en ce que** l'analyse de la page de document consiste à séparer des images et des textes contenus dans la page, la conversion de la page de document consistant à générer à partir des textes des images dans un format adapté, et à convertir le format des images pour qu'elles soient visualisables sur le terminal.

8. Système d'adaptation d'un document pour le rendre visualisable sur un terminal présentant des capacités d'affichage limitées, le système comprenant un module d'adaptation (15) comportant des moyens (13) pour déterminer des capacités de traitement et d'affichage d'un terminal (11), et des moyens (17) pour convertir une page d'un document dans un format graphique ou semi-graphique choisi en fonction des capacités de traitement et d'affichage du terminal, le système comprenant des moyens pour transmettre au moins en partie l'image de la page de document convertie vers le terminal,
**caractérisé en ce que** le module d'adaptation (15) comprend en outre des moyens (18) pour analyser la page de document devant être affichée par le terminal (11), afin d'en déterminer des caractéristiques comprenant la taille de caractères employée dans la page, l'image résultant de la conversion présentant une résolution choisie en fonction des caractéristiques du document, de manière à ce que le contenu de la page de document soit lisible à l'écran d'affichage du terminal.

9. Système selon la revendication 8,
**caractérisé en ce que** les moyens de détermination des capacités de traitement et d'affichage du terminal comprennent des moyens pour déterminer un axe d'affichage correspondant à un axe d'une plus grande dimension d'image susceptible d'être affichée par le terminal, les moyens d'analyse de la page de document à afficher comportant des moyens de détermination d'un sens de lecture de la page de document, le module d'adaptation (15) comprenant des moyens pour adapter l'image résultant de la conversion en faisant coïncider le sens de lecture de la page de document à l'axe d'affichage du terminal.

10. Système selon la revendication 8 ou 9,
**caractérisé en ce que** le module d'adaptation (15) comprend en outre de moyens pour découper l'image résultant de la conversion en bandes dont les dimensions correspondent à des dimensions maximum d'une image susceptible d'être affichée par le terminal, et dont l'orientation dans l'image correspond à l'axe de lecture de la page de document, et des moyens pour transmettre successivement vers le terminal les bandes d'image de l'image de la page de document.

11. Système selon l'une des revendications 8 à 10,
**caractérisé en ce que** le module d'adaptation est intégrable dans un serveur Web (12) diffusant des documents vers des terminaux mobiles (11).

12. Système selon l'une des revendications 8 à 10,
**caractérisé en ce que** le module d'adaptation (15) est intégrable dans une passerelle (4) assurant l'interconnexion entre un réseau de téléphonie mobile (2) auquel les terminaux sont susceptibles d'être connectés, et un réseau de transmission de données (5) donnant accès à des documents susceptibles d'être visualisés par les terminaux.

13. Système selon l'une des revendications 8 à 10,
**caractérisé en ce que** le module d'adaptation (15) est intégrable dans un serveur spécialisé (10) connecté à un réseau de transmission de données (5) donnant accès à des documents susceptibles d'être visualisés par les terminaux (11), les terminaux étant des terminaux mobiles susceptibles de se connecter à un réseau de téléphonie mobile (2) interconnecté avec le réseau de transmission de données.

## Claims

1. Method for adapting a document so as to make it viewable on a terminal (11) having limited display capabilities, which method includes the following steps of :
- determining (21) processing and display capabilities of the terminal,
- converting (23) a page of a document into a graphic or semi-graphic format chosen on the basis of the processing and/or display capabilities of the terminal, and
- at least partially transmitting (25, 27) the image of the converted document page to the terminal,
**characterized in that** it includes steps consisting of analyzing (22, 30) the document page to be displayed by the terminal (11) so as to determine characteristics including the size of the characters used in the page, wherein the image resulting from the conversion has a resolution selected on the basis of the characteristics of the document, so that the contents of the document page can be read on the screen of the terminal.

2. Method according to claim 1, **characterized in that** the determination (21) of the processing and display capabilities of the terminal comprises a step of determining a display axis corresponding to an axis of a larger dimension of an image capable of being displayed by the terminal (11), wherein the analysis of the document page to be displayed comprises a step of determining a reading direction of the document page, and the conversion of the document page is followed by a step of adapting the image resulting from the conversion, consisting of making the reading direction of the document page coincide with the display axis of the terminal.

3. Method according to claim 1 or 2, **characterized in that** it also includes a step (26) of extracting, from the image resulting from the conversion, a band of which the dimensions correspond to the maximum dimensions of an image capable of being displayed by the terminal, and of which the orientation in the image corresponds to the reading axis of the document page, which image band is transmitted to the terminal.

4. Method according to one of claims 1 to 3, **characterized in that** the resolution of the image generated by the conversion of a document page is determined on the basis of the size of alphanumeric characters present in the document page and on the basis of the dimensions of the page.

5. Method according to one of claims 1 to 4, **characterized in that** it includes a preliminary step of selecting a portion of a document page to be displayed on the screen of the terminal (11) including steps consisting of converting the document page into a reduced image having a format compatible with the processing and display capabilities of a terminal, and with a resolution selected so that the entire image can be displayed by the terminal, and transmitting the reduced image of the page to the terminal, wherein the user of the terminal then has the possibility of selecting an area of the displayed image, which selected area of the document page is then converted to a resolution selected on the basis of the characteristics of the document page, so that the contents of the document page can be read on the screen of the terminal.

6. Method according to one of claims 1 to 5, **characterized in that** if the document page is an image representing text, the analysis of the document page includes steps of recognizing the alphanumeric characters present in the document page and determining a main size of the recognized alphanumeric characters, with the resolution of the image generated by the conversion of a document page being determined on the basis of the main size obtained.

7. Method according to one of claims 1 to 6, **characterized in that** the analysis of the document page consists of separating images and text contained on the page, wherein the conversion of the document page consists of generating, based on the text, images in an adapted format, and converting the format of the images so that they can be viewed on the terminal.

8. System for adapting a document so as to make it viewable on a terminal having limited display capabilities, which system includes an adaptation module (15) comprising means (13) for determining processing and display capabilities of a terminal (11), and means (17) for converting a page of a document into a graphic or semi-graphic format selected on the basis of the processing and display capabilities of the terminal, which system also includes means for at least partially transmitting the image of the converted document page to the terminal,
**characterized in that** the adaptation module (15) also includes means (18) for analyzing the document page to be displayed by the terminal (11), so as to determine characteristics including the size of the characters used in the page, wherein the image resulting from the conversion has a resolution selected on the basis of the characteristics of the document, so that the contents of the document page can be read on the display screen of the terminal.

9. System according to claim 8, **characterized in that** the means for determining the processing and display capabilities of the terminal include means for determining a display axis corresponding to an axis of a larger dimension of an image capable of being displayed by the terminal, wherein the means for analyzing the document page to be displayed comprise means for determining a reading direction of the document page, the adaptation module (15) includes means for adapting the image resulting from the conversion causing the reading direction of the document page to coincide with the display axis of the terminal.

10. System according to claim 8 or 9 **characterized in that** the adaptation module (15) further comprises means for transferring the image resulting from conversion into bands whose dimensions correspond to the maximum dimensions of an image adapted to be displayed by the terminal, and whose orientation in the image corresponds to the reading axis of the document page, and means for successively transmitting toward the terminal the image bands and the image of the document page.

11. System according to claim 8 or 10, **characterized in that** the adaptation module is integrated in a web server (12) delivering documents to mobile terminals (11).

12. System according to one of claims 8 to 10, **characterized in that** the adaptation module (15) is integrated in a gateway (4) providing the interconnection between a mobile telephone network (2) to which the terminals are capable of being connected, and a data transmission network (5) providing access to documents capable of being viewed on the terminals.

13. System according to one of claims 8 to 10, **characterized in that** the adaptation module (15) is integrated in a specialized server (10) connected to a data transmission network (5) providing access to documents capable of being viewed on the terminals (11), wherein the terminals are mobile terminals capable of being connected to a mobile telephone network (2) interconnected with the data transmission network.

## Patentansprüche

1. Verfahren zur Anpassung eines Dokuments, um dieses auf einem Endgerät (11) sichtbar zu machen, das begrenzte Anzeigefähigkeiten aufweist, wobei das Verfahren die Schritte umfasst, bestehend aus:
- Bestimmen (21) der Bearbeitungs- und Anzeigefähigkeiten eines Endgerätes,
- Umwandeln (23) einer Seite eines Dokuments in ein grafisches oder halbgrafisches Format, das in Abhängigkeit von den Bearbeitungs- und Anzeigefähigkeiten des Endgerätes gewählt wird, und
- Übertragen (25, 27) wenigstens eine Teils des Bildes der Seite des umgewandelten Dokuments an das Endgerät,
**dadurch gekennzeichnet, dass** dieses die Schritte umfasst, bestehend aus Analysieren (22, 30) der Seite des Dokuments bevor dieses durch das Endgerät (11) angezeigt wird, um daraus Eigenschaften zu bestimmen, welche die in der Seite verwendete Zeichengröße umfassen, wobei das aus der Umwandlung resultierende Bild eine Auflösung zeigt, die in Abhängigkeit von den Eigenschaften des Dokuments gewählt wird, so dass damit der Inhalt der Seite des Dokuments auf dem Bildschirm des Endgerätes lesbar wird.

2. Verfahren nach Anspruch 1,
**dadurch gekennzeichnet, dass** die Bestimmung (21) der Bearbeitungs- und Anzeigefähigkeiten des Endgerätes einen Schritt der Bestimmung einer Anzeigeachse umfasst, die mit einer Achse eines Bildes mit viel größerer Abmessung als durch das Endgerät (11) angezeigt werden kann, korrespondiert, wobei die Analyse der Seite des anzuzeigenden Dokuments einen Schritt zur Bestimmung einer Leserichtung der Seite des Dokuments umfasst, wobei der Umwandlung der Seite des Dokuments ein Anpassungsschritt des aus der Umwandlung resultierenden Bildes folgt, der darin besteht, die Leserichtung der Seite des Dokuments mit der Anzeigeachse des Endgerätes zusammenzulegen.

3. Verfahren nach Anspruch 1 oder 2,
**dadurch gekennzeichnet, dass** dieses ferner einen Schritt (26) der Extraktion des sich aus der Umwandlung eines Streifens ergebenden Bildes umfasst, dessen Abmessungen mit den maximalen Abmessungen eines Bildes korrespondieren, das durch das Endgerät angezeigt werden kann, und dessen Ausrichtung in dem Bild mit der Leseachse der Seite des Dokuments korrespondiert, wobei der Bildstreifen an das Endgerät übertragen wird.

4. Verfahren nach einem der Ansprüche 1 bis 3,
**dadurch gekennzeichnet, dass** die Auflösung des durch die Umwandlung einer Seite des Dokuments erzeugten Bildes in Abhängigkeit von den Größen der in der Seite des Dokuments vorhandenen alphanumerischen Zeichen und in Abhängigkeit von den Abmessungen der Seite bestimmt wird.

5. Verfahren nach einem der Ansprüche 1 bis 4,
**dadurch gekennzeichnet, dass** dieses eine vorhergehende Phase einer Auswahl eines Teils der auf dem Bildschirm des Endgeräts (11) anzuzeigenden Seite des Dokuments umfasst, welche die Schritte aufweist, bestehend aus einem Umwandeln der Seite des Dokuments in ein verkleinertes Bild, das ein Format aufweist, das mit den Bearbeitungs- und Anzeigefähigkeiten eines Endgerätes kompatibel ist, und mit einer Auflösung, die so ausgewählt ist, dass die Gesamtheit des Bildes durch das Endgerät angezeigt werden kann, und einem Übertragen des verkleinerten Bildes der Seite an das Endgerät, wobei der Nutzer des Endgerätes dann die Möglichkeit hat, einen Bereich des angezeigten Bildes auszuwählen, wobei der ausgewählte Bereich der Seite des Dokuments anschließend in eine Auflösung umgewandelt wird, die in Abhängigkeit von den Eigenschaften der Seite des Dokuments gewählt wird, so dass damit der Inhalt der Seite des Dokuments auf dem Bildschirm des Endgerätes lesbar wird.

6. Verfahren nach einem der Ansprüche 1 bis 5,
**dadurch gekennzeichnet, dass**, wenn die Seite des Dokuments ein Bild ist, das Text wiedergibt, umfasst die Analyse der Seite des Dokuments Schritte der Wiedererkennung alphanumerischer Zeichen, die in der Seite des Dokuments vorhanden sind, und der Bestimmung einer Majoritätsgröße wiedererkannter alphanumerischer Zeichen, wobei die Auflösung des durch die Umwandlung einer Seite des Dokuments erzeugten Bildes ausgehend von der erhaltenden Majoritätsgröße bestimmt wird.

7. Verfahren nach einem der Ansprüche 1 bis 6,
**dadurch gekennzeichnet, dass** die Analyse der Seite des Dokuments darin besteht, in der Seite enthaltende Bilder und Texte zu trennen, wobei die Umwandlung der Seite des Dokuments darin besteht, aus den Texten Bilder in einem Angepassten Format zu erzeugen und das Format der Bilder umzuwandeln, damit diese auf dem Endgerät sichtbar werden können.

8. System zur Anpassung eines Dokuments, um dieses auf einem Endgerät lesbar zu machen, das begrenzte Anzeigefähigkeiten aufweist, wobei das System ein Anpassungsmodul (15) umfasst, mit einer Einrichtung (13), um die Bearbeitungs- und Anzeigefähigkeiten eines Endgerätes (11) zu bestimmen, und einer Einrichtung (17), um eine Seite eines Dokuments in ein grafisches oder halbgrafisches Format umzuwandeln, das in Abhängigkeit von den Bearbeitungs- und Anzeigefähigkeiten des Endgerätes gewählt wird, wobei das System eine Einrichtung umfasst, um wenigstens ein Teil des Bildes der umgewandelten Seite des Dokuments an das Endgerät zu übertragen,
**dadurch gekennzeichnet, dass** das Anpassungsmodul (15) ferner eine Einrichtung (18) umfasst, um die Seite des Dokuments zu analysieren, bevor sie durch das Endgerät (11) angezeigt wird, um daraus Eigenschaften zu bestimmen, welche die Größe der in der Seite verwendeten Zeichen umfassen, wobei das aus der Umwandlung resultierende Bild eine Auflösung aufweist, die in Abhängigkeit von den Eigenschaften des Dokuments gewählt wird, so dass damit der Inhalt der Seite des Dokuments auf dem Bildschirm des Endgeräts lesbar wird.

9. System nach Anspruch 8,
**dadurch gekennzeichnet, dass** die Einrichtung zur Bestimmung der Bearbeitungs-und Anzeigefähigkeiten des Endgerätes eine Einrichtung umfasst, um eine Anzeigeachse zu bestimmen, die mit einer Achse eines Bildes mit viel größerer Abmessung als auf dem Endgerät angezeigt werden kann, korrespondiert, wobei die Analyseeinrichtung der anzuzeigenden Seite des Dokuments eine Einrichtung zur Bestimmung einer Leserichtung der Seite des Dokuments umfasst, wobei das Anpassungsmodul (15) eine Einrichtung umfasst, um das aus der Umwandlung resultierende Bild so anzupassen, dass die Leserichtung der Seite des Dokuments mit der Anzeigeachse des Endgerätes zusammenfällt.

10. System nach Anspruch 8 oder 9,
**dadurch gekennzeichnet, dass** das Anpassungsmodul (15) ferner eine Einrichtung umfasst, um das sich aus der Umwandlung resultierende Bild in Streifen zu schneiden, deren Abmessungen mit den maximalen Abmessungen eines Bildes, die durch das Endgerät angezeigt werden können, korrespondieren und deren Ausrichtung in dem Bild mit der Leseachse der Seite des Dokuments korrespondiert, und eine Einrichtung, um nacheinander die Bildstreifen des Bildes der Seite des Dokuments an das Endgerät zu übertragen.

11. System nach einem der Ansprüche 8 bis 10,
**dadurch gekennzeichnet, dass** das Anpassungsmodul in einen Webserver (12) integriert ist, der Dokumente an mobile Endgeräte (11) liefert.

12. System nach einem der Ansprüche 8 bis 10, **dadurch gekennzeichnet, dass** das Anpassungsmodul (15) in ein Brückenelement (4) integriert ist, das die Verbindung zwischen einem mobilen Telefonnetz (2), an welches sich die Endgeräte anbinden können, und einem Daten-Übertragungsnetz (5), das Zugriff auf Dokumente gibt, die durch die Endgeräte sichtbar gemacht werden können, gewährleistet.

13. System nach einem der Ansprüche 8 bis 10,
**dadurch gekennzeichnet, dass** das Anpassungsmodul (15) in einen spezialisierten Server (10) integriert ist, der an ein Daten-Übertragungsnetz (5) angeschlossen ist, das einen Zugriff auf Dokumente gibt, die durch die Endgeräte (11) angezeigt werden können, wobei die Endgeräte mobile Endgeräte sind, die in der Lage sind, sich an ein mobiles Telefonnetz (2) anzubinden, das mit dem Daten-Übertragungsnetz verbunden ist.
